# EUROPEAN PATENT APPLICATION

(11) **EP 1 953 680 A2**
(43) Date of publication of application: **06.08.2008**
(21) Application number: 08150730.3
(22) Date of filing: 28.01.2008
(51) Int. Cl.: G06K 9/20

(54) **Biometric device for reading a fingerprint and method of use**

(30) Priority: 01.02.2007 IT PD20070032
(71) Applicant: Alluser Industrie S.R.L., 35020 Due Carrare, PD (IT)
(72) Inventor: Nais, Ugo, 35100, PADOVA (IT)
(74) Representative: Modiano, Micaela Nadia

(57) **Abstract**

A biometric device for reading a fingerprint, comprising, within an ergonomic holder (11), at least two swipe sensors (12, 13) which are arranged side by side and are staggered and inclined so as to form a recess in which a fingertip (14) is slid in order to read its print from a plurality of viewpoints.

## Description

The present invention relates to a biometric device for reading a fingerprint.

The invention also relates to a particular method of use of such biometric device.

A generic biometric device verifies the identity and recognizes a person on the basis of biological features.

Among the various biometric systems, those based on fingerprints are unquestionably the best-known and most studied.

Thanks to the characteristics of stability and uniqueness of fingerprints, they in fact ensure a high degree of security.

Each user is subjected initially to an initial registration operation, known as enrollment, during which a copy of his fingerprint is acquired; its discriminating features, extracted by means of specialized image processing algorithms, constitute the model of the user.

The image of the fingerprint is processed to extract the characteristic information that forms the so-called template, which can be defined as a mathematical representation of the biometric data.

The template can be recorded in a centralized database or on a personal smart card of the user.

Conversion into digital data of the parameters extrapolated from the measurement of the biological value constitutes a true "signature" which identifies the individual; in the case of fingerprints, a typical signature considered by the biometric system is represented by the coordinates of the so-called minutiae, which are the bifurcation and ending points of furrows.

Conversion of the data captured by the sensor into "signatures" is very important, since it must be able to reject the obvious information while preserving and highlighting the information that instead is peculiar.

Poor management of extraction causes uncertainties in biometric recognition and potential security faults; if instead the algorithm does not compress the signature sufficiently, recognition times become unacceptable.

Devices for reading a fingerprint are currently known which are based on the use of an electronic swipe sensor, on which the finger is made to slide in order to acquire the fingerprint.

Although these known devices are appreciated and widespread, they do not allow to ensure correct identification of the biometric data of the person, determining so-called false negative recognitions, caused by the possibility that the sliding of the finger over the sensor occurs following an incorrect placement of said finger on the sensor, or due to the fact that enrollment was performed in a manner which is difficult to repeat; it is in fact sufficient for the inclination of the finger with respect to the vertical axis of the sensor, or the direction in which the finger is slid over the sensor, to be less than perfectly perpendicular to the area of said sensor to obtain images which have a smaller number of minutiae than the number stored for identification.

This type of false negative recognitions therefore entails an inconvenience for the user, who is asked to repeat the operation several times in order to be able to acquire an image of the fingerprint which matches the stored image.

Further, of course, by preceding by trial and error there is always the risk that the subject will be rejected and will not be allowed transit for a certain time.

The aim of the present invention is to provide a biometric device for reading a fingerprint which is capable of obviating the cited drawbacks of similar known types of device.

Within this aim, an object of the present invention is to provide a biometric device which is capable of a more accurate reading of the fingerprint, with a consequent reduced risk of false negative recognitions and therefore with higher reliability.

Another object of the present invention is to provide a biometric device which is simple to use, like similar known types of device.

Another object of the present invention is to provide a biometric device which can be associated with other known types of security device.

Another object of the present invention is to provide a biometric device for reading a fingerprint which can be manufactured with known systems and technologies.

This aim and these and other objects, which will become better apparent hereinafter, are achieved by a biometric device for reading a fingerprint, characterized in that it comprises, within an ergonomic holder, at least two swipe sensors which are arranged side by side and are staggered and inclined so as to form a recess in which a fingertip is slid in order to read its print.

Further characteristics and advantages of the invention will become better apparent from the following detailed description of a preferred but not exclusive embodiment thereof, illustrated by way of non-limiting example in the accompanying drawings, wherein:
Figure 1 is a perspective view of the device according to the invention;
Figure 2 is a front view of the device;
Figure 3 is a top view of the device according to the invention;
Figures 4 to 6 are the three sectional views IV-IV, V-V and VI-VI shown in Figure 3;
Figure 7 exemplifies a method of use of a device according to the invention;
Figures 8 and 9 exemplify a sequence of use of the device according to the invention.

With reference to the figures, a biometric device for reading a fingerprint according to the invention is generally designated by the reference numeral 10.

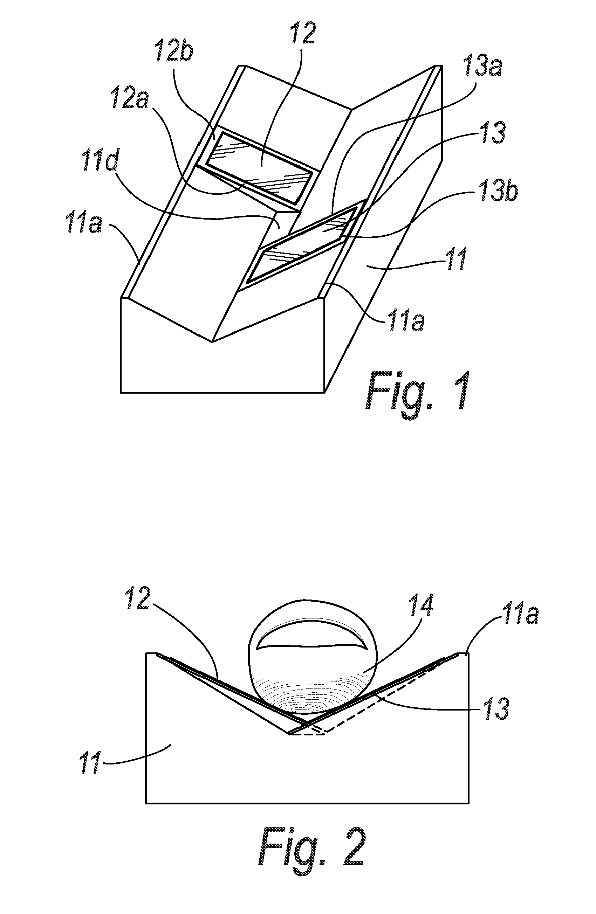

The device 10 comprises, inside an ergonomic holder 11, two swipe sensors 12 and 13 which are substantially flat and are arranged close to each other along one of their long sides 12a and 13a respectively, and are staggered and inclined so as to form a V-shaped recess, clearly shown in Figure 2, in which a fingertip 14 can be slid in order to read its print.

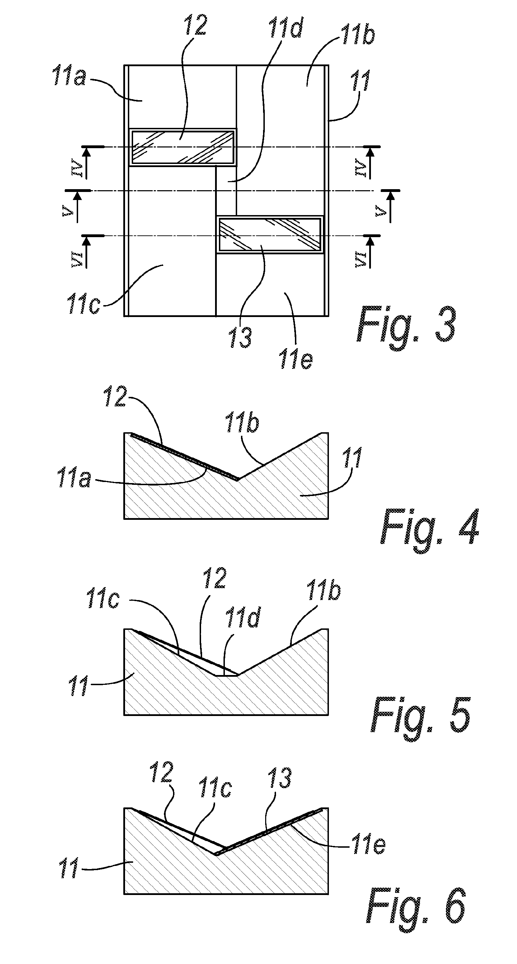

The ergonomic holder 11 described here by way of example is constituted by a concave element which has a substantially V-shaped cross-section; in particular, said concave element has a first substantially V-shaped transverse cross-section, shown in Figure 4, in which the side 11a on which the first sensor 12 lies is longer and slightly less inclined than the other side 11b; a second central transverse cross-section, shown in Figure 5, in which the two facing sides 11c and 11b have the same length and inclination and between them there is an interposed flat portion 11d; and a third transverse cross-section, which is also V-shaped and is shown Figure 6 and in which the side 11e on which the second sensor 13 lies is longer and slightly less inclined than the facing side 11c.

The two sensors 12 and 13 can therefore be more or less spaced in a longitudinal direction by interposing a central portion 11d.

The two sensors 12 and 13 can be for example of the capacitive type and also of the RF or ultrasound type or provided by means of similar technologies suitable for the same purpose.

The two sensors 12 and 13 are arranged on planes which are inclined substantially symmetrically with respect to the vertical longitudinal plane of symmetry of the holder 11.

The two sensors staggered in space allow to obtain two images which represent different regions of the same fingertip 14, with a common overlap area, instead of a single image, which in any case is limited in its dimensions by the use of a single sensor and therefore by the width of the sensitive area of said individual sensor.

In this manner, one obtains an image whose dimensions are larger than those obtainable by using a single sensor, and the fact of having a larger image therefore allows to ensure a correct identification of the biometric data of the person, reducing the risk of having false negative recognitions; the increase in the acquisition area decreases the number of rejections and speeds up the recognition process.

Once the biometric data item has been acquired, the biometric device, by using one or more associated microprocessors and specific algorithms, reconstructs the image thus acquired in order to obtain a clear and unequivocal data item which identifies the person.

These images can be stored on a fixed medium, such as a hard disk, by using protocols which mask the biometric data item by means of cryptography algorithms; in this manner, the image as a whole is saved so that it can then be reused in all cases prescribed by applicable statutory provisions and regulations.

The use of a plurality of electronic sensors arranged appropriately to acquire biometric data entails a preprocessing step to realign the images obtained from the two sensors in order to obtain a unique and univocal image.

Further, in order to improve the quality of the image, it is necessary to apply filters, which by amplifying the contrast between the lighter regions (troughs) and the dark regions (crests), allow better identification of minutiae, which must be taken in a clearly defined number within images of preset dimensions, such as for example, in the case of ABI regulations, 12.7 mm x 25.4 mm.

The image obtained from the system described here is therefore a set of images of the same detail taken from different angles, a first image captured by a first sensor 12 and a second image captured by a second sensor 13.

These two images overlap in specific areas, allowing therefore not only to have a larger capture area, but also to increase the number of minutiae useful for identifying the subject, reducing the number of false negative recognitions.

Further, since the system thus described does not require a very heavy reprocessing in terms of the algorithms used to treat the images, since as already mentioned the images remain separate, it allows to speed up the recognition operation, increasing the probabilities of recognizing the subject immediately or in any case in a shorter average time than similar known types of device.

The storage of the resulting double image allows to store the position of the recognized minutiae by means of a suitable algorithm which attributes to the minutiae spatial coordinates which can be mapped as geographical locations or as the vertices of a polygon.

In this manner, the size of the data to be saved is reduced significantly and the data can thus be stored easily on a smart card, memory card or other magnetic or optical media or transponders for one-to-one identification.

The data item thus reprocessed and saved on a medium, which as mentioned can be a smart card, in itself is no longer a biometric sensitive data item, since it is merely a series of spatial coordinates which must be compared with a suitable subset of the map of minutiae identified during the acquisition of an image which represents the biometric data item of the fingerprint.

The operation of the device 10 according to the invention is as follows.

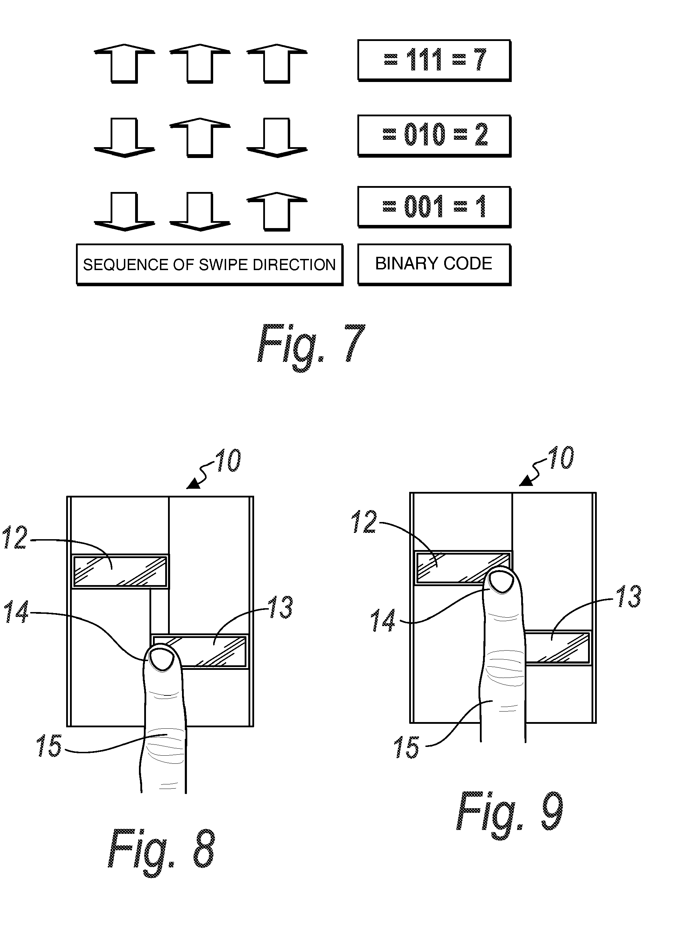

During the step for swiping the finger 15, such finger encounters a first sensor 12 of the two sensors and then the other sensor 13, as exemplified in Figures 8 and 9.

It is thus possible to determine uniquely the direction in which the finger 15 has been swiped over the acquisition area, since the finger always encounters one of the two sensors first; this allows to use a suitable number of swipes, performed with a specific sequence, as an additional access code, which is added to user recognition by identification of the map of minutiae previously saved in the system or entered by means of a smart card.

The invention therefore relates also to this particular method of use of the device 10, shown by way of example in Figure 7: if the user swipes his finger on the two sensors 12 and 13 a first time in a first direction, a second time in the same direction and a third time in the opposite direction, we have identified the numeral 1 in binary code; with similar sequences, such as the ones shown in Figure 7, it is possible to define more or less complex codes, which can be used without having to resort to additional alphanumeric keypads, which would compromise the typical compactness of these biometric devices for reading fingerprints.

If the user ill-advisedly does not swipe his finger 15 but rests it on the acquisition area, the control system is capable of recognizing a state which is different from transit, indeed because it is not possible to determine the swiping direction as the time sequence between the acquired images, which is typical and identifies an object which moves over sensors, does not occur.

The code determined by the sequence of passes over the two sensors is entered into the control system associated with the device 10 by means of a series of consecutive swipes which have suitable pauses between them so that the microprocessor recognizes a new pass with respect to the preceding one.

The storage of the sequence of the directions in which the subsequent passes over the two sensors are performed is none other than a binary representation which determines the access PIN or code; such code is saved and stored together with the biometric data item (image), thus allowing to increase the degree of security of the access system.

This system, therefore, in addition to associating the biometric data item with a user, in this particular case the map of a subset of minutiae, also associates therewith a secret code or PIN which is entered into the system by using the biometric data item itself, which is used no longer as a "data item" but as a means for entering a recognition code.

Further, the need to swipe the finger many times over the acquisition area allows the system to acquire a series of images of such biometric data item, reducing on the one hand the possibility of false recognitions or mistakes and at the same time ensuring a higher degree of security of the system.

In practice it has been found that the invention thus described solves the problems noted in known types of biometric device for reading fingerprints.

In particular, the present invention provides a biometric device capable of a more accurate reading of the fingerprint, with a consequent reduced risk of false negative recognitions and therefore with higher reliability.

Moreover, the present invention provides a biometric device which is simple to use, like similar known types of device, since it is sufficient to swipe thereon a fingertip one or more times.

Further, the present invention provides a biometric device which can be associated with other known types of security device but can also be used to determine an additional recognition code, for example of the binary type, by swiping a fingertip several times on it in one direction or in the opposite direction a preset number of times.

Moreover, the present invention provides a biometric device for reading a fingerprint which can be manufactured with known equipment and technologies.

The invention thus conceived is susceptible of numerous modifications and variations, all of which are within the scope of the appended claims; all the details may further be replaced with other technically equivalent elements.

In practice, the materials employed, so long as they are compatible with the specific use, as well as the dimensions, may be any according to requirements and to the state of the art.

The disclosures in Italian Patent Application No. PD2007A000032 from which this application claims priority are incorporated herein by reference.

Where technical features mentioned in any claim are followed by reference signs, those reference signs have been included for the sole purpose of increasing the intelligibility of the claims and accordingly such reference signs do not have any limiting effect on the interpretation of each element identified by way of example by such reference signs.

## Claims

1. A biometric device for reading a fingerprint, **characterized in that** it comprises, within an ergonomic holder (11), at least two swipe sensors (12, 13) which are arranged side by side and are staggered and inclined so as to form a recess in which a fingertip (14) is slid in order to read its print from a plurality of viewpoints.

2. The device according to claim 1, **characterized in that** it comprises two substantially flat swipe sensors (12, 13), which are arranged side by side and mutually close along a long side (12a, 13a), and are staggered and inclined so as to form a V-shaped recess for the sliding of the fingertip.

3. The device according to one or more of the preceding claims, **characterized in that** the ergonomic holder (11) described here by way of example is constituted by a concave element which has a substantially V-shaped cross-section.

4. The device according to one or more of the preceding claims, **characterized in that** said concave element has a first substantially V-shaped transverse cross-section, in which the side (11a) on which the first sensor (12) lies is longer and slightly less inclined than the other side (11b), a second central transverse cross-section, in which the two facing sides (11c, 11b) have the same length and inclination and a flat portion (11d) is interposed between them, and a third transverse cross-section, which is also V-shaped and in which the side (11e) on which the second sensor (13) lies is longer and slightly less inclined than the facing side (11c).

5. The device according to one or more of the preceding claims, **characterized in that** the two sensors (12, 13) can be arranged so that they are more or less spaced in a longitudinal direction by interposing a central portion (11d).

6. The device according to one or more of the preceding claims, **characterized in that** said sensors (12, 13) are of the capacitive, RF or ultrasound type, or of similar technologies suitable for the same purpose.

7. The device according to one or more of the preceding claims, **characterized in that** said sensors (12, 13) are arranged so that their shorter side (12b, 13b) is parallel to the edge (11a) of the holder (11), said sensors (12, 13) being arranged on planes which are inclined substantially symmetrically with respect to the longitudinal vertical plane of symmetry of the holder (11).

8. The device according to one or more of the preceding claims, **characterized in that** said two sensors (12, 13) staggered in space allow to obtain two images which represent different regions of the same fingertip (14), with a common overlap area.

9. The device according to one or more of the preceding claims, **characterized in that** it uses one or more associated microprocessors and preset algorithms to reconstruct the acquired images of the fingertip (14) in order to obtain a clear and univocal data item which identifies said person.

10. The device according to one or more of the preceding claims, **characterized in that** the acquired images can be stored on a fixed medium, such as a hard disk, by using protocols which mask the biometric data item by means of cryptography algorithms.

11. The device according to one or more of the preceding claims, **characterized in that** in order to improve image quality it is possible to apply filters, which by amplifying the contrast between the lighter regions (troughs) and dark regions (crests) allow better identification of minutiae.

12. The device according to one or more of the preceding claims, **characterized in that** the images acquired by the various sensors (12, 13) remain separate, allowing to accelerate the recognition operation.

13. The device according to one or more of the preceding claims, **characterized in that** storage of the double image thus obtained allows to store the position of the recognized minutiae by means of an algorithm which assigns to the minutiae spatial coordinates which can be mapped as geographical locations or the vertices of a polygon.

14. The device according to one or more of the preceding claims, **characterized in that** the data to be saved can then be stored in a smart card, memory card, or other media of the magnetic or optical type or a transponder for identification of the one-to-one type.

15. The device according to one or more of the preceding claims, **characterized in that** it allows to determine univocally the direction in which the finger (15) has been swiped over the acquisition area, since the finger encounters always one of the two sensors first, this allowing to use a suitable number of swipes performed with a given sequence as an additional access code, which is added to user recognition by means of the identification of the map of minutiae saved previously in the system or entered by means of a smart card.

16. A method of use of a device according to one or more of the preceding claims, which consists in swiping the fingertip (14) on the device (10) either in one direction, first on one first sensor (12) and then on the second sensor (13), or in the opposite direction, first on the second sensor (13) and then on the first sensor (12), in order to define a sequence of inputs designed to define an auxiliary identification code without having to resort to additional alphanumeric keypads.

17. The method according to the preceding claim, **characterized in that** said auxiliary code is determined by means of a series of consecutive swipes which have suitable pauses between them so that the associated microprocessor recognizes a new pass with respect to the preceding one.

18. The method according to claims 16 and 17, **characterized in that** storage of the sequence of the directions in which the successive passes over the two sensors are performed defines a binary representation which determines the access PIN or code; said code is saved and stored together with the biometric data item (image), thus allowing to increase the degree of security of the access system.
